# EUROPÄISCHE PATENTSCHRIFT

(11) **EP 0 882 399 B1**
(45) Veröffentlichungstag und Bekanntmachung des Hinweises auf die Patenterteilung: **13.06.2001**
(21) Anmeldenummer: 98106707.7
(22) Anmeldetag: 14.04.1998
(51) Int. Cl.: A21C 3/06, A21C 11/10

(54) **Ausgangsteigstück für gewickelte Teigprodukte**
Dough piece for rolled dough products
Morceau de pâte pour produits pâteux roulés

(30) Priorität: 05.06.1997 DE 19723614
(43) Veröffentlichungstag der Anmeldung: 09.12.1998
(73) Patentinhaber: A. FRITSCH GMBH & CO. KG, D-97348 Markt Einersheim (DE)
(72) Erfinder: Hoos, Josef, Dipl.-Ing., 97348 Markt Einersheim (DE)
(74) Vertreter: Götz, Georg, Dipl.-Ing.

(56) Entgegenhaltungen:
- WO-A-93/09673
- FR-A- 620 270
- GB-A- 2 045 195
- US-A- 5 240 731

## Beschreibung

Die Erfindung betrifft ein Teigstück zur Bildung gewickelter Teigprodukte wie zum Beispiel Salzstangen oder Kornspitz, welche Teigstücke eine flache mehreckige Grundform aufweisen, die zwei schräge und zueinander konvergierende Zwischenseiten besitzt.

Derartige Teigstücke werden aus einem kontinuierlich geförderten Teigband ausgeschnitten und als Ausgangsform für gewickelte Teigprodukte zur Herstellung insbesondere von Komspitz und Salzstangen auf Laminieranlagen oder Croissant-Herstellungsanlagen verwendet. Auch Blätter- und Plunderteigprodukte sowie Hefeteigprodukte wie Pizzas oder Baguettes werden üblicherweise mit Laminieranlagen erzeugt. Croissant-Herstellungsanlagen dienen zur Produktion von Croissants und Hörnchen. Der Vorteil dieser Anlagen, insbesondere der Laminieranlagen, liegt in der kontinuierlichen Produktion und der hohen Stundenleistung und der Möglichkeit, die Investition durch ein größeres Produktspektrum schneller zu armortisieren. Gleichzeitig sind Einsparungen an Teigmaterial aufgrund einer restteigfreien Produktion angestrebt. Dies läßt sich vor allem mit geometrischen Formen für die Teigstücke wie symmetrische Dreiecke oder Trapeze erreichen. Naturgemäß weisen diese Formen allerdings spitzwinklige Ecken auf, die beim Backen des erzeugten Teigformlings, beispielsweise des Roh-Croissants, leicht verbrennen.

In WO-A-9309673 ist eine Vorrichtung zum Ausstechen von Formen aus flächigen Körpern sowie eine Form für Backwaren offenbart. Es soll das Problem angegangen werden, dass Teigstücke mit Ecken beim Backen in einem Backofen, beim Fritieren oder bei einer entsprechenden Behandlung an diesen Ecken braun werden oder sogar verbrennen können. Ferner soll es mit der Form möglich sein, mit möglichst wenig Ecken ohne Verschnitt Teig ausstechen zu können. Zur Lösung werden als Ausstechprofile Sinusformen, Sägezahn-Profile, Parallelogramme sowie vollständige Trapeze vorgeschlagen. Die vollständige Trapezform ist ferner in EP-A-0 482 917 zur Herstellung von Croissant-Teigstücken angegeben.

Der Erfindung liegt die Aufgabe zugrunde, Teigstücke der eingangs genannten Art so auszugestalten, daß sich daraus für die üblichen Teigwaren Teigformlinge leicht wickeln lassen, die für den späteren Backprozeß eine robuste Struktur aufweisen und nach dem Backen ein optisch ansprechendes Äußeres ergeben.

Zur Lösung wird bei einem Teigstück mit den eingangs genannten Merkmalen erfindungsgemäß vorgeschlagen, daß die Zwischenseiten einem Teil einer Trapez- oder Dreieckform entsprechen, wobei sich an jedes der beiden Enden der Zwischenseiten eine Anschlußseite in einer recht- oder stumpfwinkligen Knickung, Biegung oder Krümmung mit ihrem einen Ende anschließt, und die jeweils anderen Enden der Anschlußseiten über eine längere und eine kürzere Stirnseite miteinander verbunden sind. Durch die Recht- oder Stumpfwinkligkeit lassen sich bei der Teigstück-Form spitze, gegenüber Backwärme besonders empfindliche Ecken vermeiden, die bei den üblicherweise verwendeten, dreieckigen oder trapezförmigen Ausgangsteigstücken vorliegen. Der Übergang insbesondere von der Zwischenseite zur Anschlußseite kann entweder abgewinkeit geknickt oder auch uber eine bogenförmige und/oder rundliche Abweichung von der geraden Linie (Krümmung, Biegung) erfolgen. Der Vermeidung spitzer Ecken dient auch der Abschluß der Anschlußseiten jeweils über eine Stirnseite. Diese kann in sich rundlich oder stumpfwinklig oder zumindest rechtwinklig geknickt verlaufen, ohne daß der Rahmen der Erfindung verlassen wird. Indem die Stirnseiten sich in ihren Längen unterscheiden, läßt sich die übliche Wicklung beispielsweise eines Croissant oder einer Salzstange durchführen, bei der das Ineinanderrollen vorzugsweise mit der längeren Stirnseite zuerst beginnt. Die kürzere Stirnseite kommt dann auf dem Außenumfang des Teigformlings zu liegen.

Nach einer besonderen Ausbildung der Erfindung verlaufen die Anschlußseiten und/oder die Stirnseiten zueinander parallel. Dabei ergibt sich zwischen den Anschluß- und den Stirnseiten jeweils ein rechter Winkel.

Mit besonderem Vorteil ist das erfindungsgemäße Teigstück in drei Abschnitte untergliedert: einen mittleren Abschnitt mit trapezartiger Struktur oder Grundriß; zwei jeweils daran von außen anschließende Abschnitte mit jeweils rechteckiger Struktur oder Kontur. Um dabei das Wickeln von innen nach außen eines Teigformlings mit sich im Durchmesser verjüngenden Endabschnitten zu ermöglichen, ist es von Vorteil, wenn die äußeren Abschnitte unterschiedliche Breiten aufweisen. Der schmälere Außenabschnitt wird dann um den breiteren Außenabschnitt herumgewickelt.

Weitere Einzelheiten, Merkmale, Vorteile und Wirkungen auf der Basis der Erfindung ergeben sich aus der nachfolgenden Beschreibung bevorzugter Ausführungsbeispiele der Erfindung sowie aus den Zeichnungen. Diese zeigen in
- Fig. 1: in Draufsicht den Grundriß eines erfindungsgemäßen Teigstückes,
- Fig. 2: in Draufsicht einen abgebrochen gezeichneten Teigbandstreifen mit zum Teil darin eingeschnittenen, erfindungsgemäßen Teigstücken nach Fig. 2,
- Fig. 3: eine Draufsicht auf den Grundriß eines gegenüber Fig. 1 abgewandelten Teigstücks,
- Fig. 4: eine Draufsicht auf einen abgebrochen gezeichneten Teigbandstreifen mit einer Mehrzahl eingeschnittener Teigstücke nach Fig. 3,
- Fig. 5: in perspektivischer Längsseitenansicht einen Teigformling, gewickelt aus einem erfindungsgemäßen Teigstück.

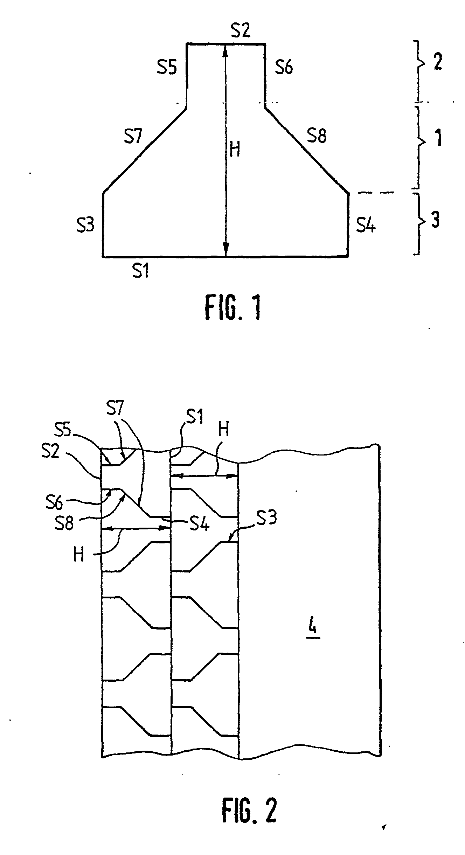

Gemäß Fig. 1 ist das erfindungsgemäße Teigstück in einen Mittelabschnitt 1, und zwei Außenabschnitte 2, 3 untergliedert. Sowohl der schmälere Außenabschnitt 2 als auch der breitere Außenabschnitt 3 schließen sich in Längsrichtung entsprechend der Höhe H des Teigstücks an den mittleren Abschnitt 1 an. Die Höhe H bezeichnet den Abstand zweier zueinander paralleler Stirnseiten S1, S2, die jeweils zu den beiden äußeren Abschnitten 3, 2 gehören. Die Längen der Stirnseiten S1, S2 entsprechen jeweils den Breiten der Außenabschnitte 3 bzw. 2.

Gemäß Fig. 1 gehören zum Mittelabschnitt 1 zwei Zwischenseiten S7, S8, die jeweils in einem spitzen Winkel gegenüber der Höhenlinie H zwischen den Stirnseiten S1, S2 verlaufen bzw. schrägwinklig aufeinander zukonvergieren. An jedem Ende der Zwischenseiten S7, S8 schließt sich im stumpfen Winkel eine Anschlußseite S3, S4, S5, S6 an. Die Anschlußseiten finden ihren Abschluß jeweils in einer dazu rechtwinklig verlaufenden Stirnseite S1, S2. Die Winkel zwischen den Zwischenseiten S7, S8 und den Anschlußseiten S3 - S6 ergeben sich aus der Höhe bzw. dem Abstand H zwischen den Stirnseiten S1, S2. Die Höhe H wird zweckmäßig nach der Art des zu wickelnden Produkts, insbesondere dessen Gewicht und Durchmesser und der Anzahl der gewünschten Wicklungen bemessen. Die Anschlußseiten S3, S4, die zum breiteren Außenabschnitt 3 gehören, entsprechen in ihrer Länge den Anschlußseiten S5, S6 des schmäleren Außenabschnitts 2. Insbesondere stimmen die gegenüberliegenden Anschlußseiten S3, S4; S5, S6 je eines Außenabschnitts 3, 2 in ihren Längen miteinander überein. Nach einer zweckmäßigen Ausgestaltung macht die Gesamtlänge zweier Anschlußseiten S3, S5 bzw. S4, S6 von unterschiedlichen Außenabschnitten 3 bzw. 2 etwa 20% der Höhe H zwischen den beiden Stirnseiten S1, S2 des Teigstücks, mindestens aber 10 mm aus.

Gegenüber herkömmlichen, beispielsweise dreieckförmigen Ausgangsteigstücken läßt sich die erfindungsgemäße Teigstückform nach Fig. 1 dadurch bilden, daß beim herkömmlich verwendeten, gleichschenkligen Dreieck die Spitzecken der Basisseiten gleichsam abgebrochen werden, und die der Basisseite gegenüberliegende Spitzecke durch ein Rechteck ersetzt wird. Dadurch werden die Spitzekken durch Seitenflächen ersetzt, die beim Backen nicht so leicht verbrennen. Der Ersatz der der Basisseite gegenüberliegenden Spitzecke durch ein Rechteck geschieht aus Gründen der restteigfreien Produktion. Zu diesem Zweck ist das Teigstück nach Fig. 1 bezüglich der Höhenlinie H, welche die Symmetrie- bzw. Mittelachse bildet, symmetrisch aufgebaut. Insbesondere verlaufen die schrägwinkligen Zwischenseiten S7, S8 bezüglich der Höhenlinie H symmetrisch.

Aufgrund der oben geschilderten Symmetrie bezüglich der Höhen bzw. Abstandslinie H zwischen den Stirnseiten S1, S2 läßt sich gemäß Fig. 2 aus einem kontinuierlichen Teigband 4 ein restteigfreies Ausstanzen der Teigstücke S1 - S7 herbeiführen. Dabei werden nebeneinanderliegende Teigstücke S1 - S7 jeweils um 180° zueinander verdreht ausgestanzt, wobei ihre jeweiligen Abstands- bzw. Höhenlinien H zueinander parallel verlaufen. Die in der Draufsicht nach Fig. 1 linke Gesamt-Längsseite S3 - S7 - S5 eines Teigstücks liegt an der nach Fig. 1 rechten Gesamt-Längsseite S4 - S8 - S6 des unmittelbar benachbarten Teigstücks an.

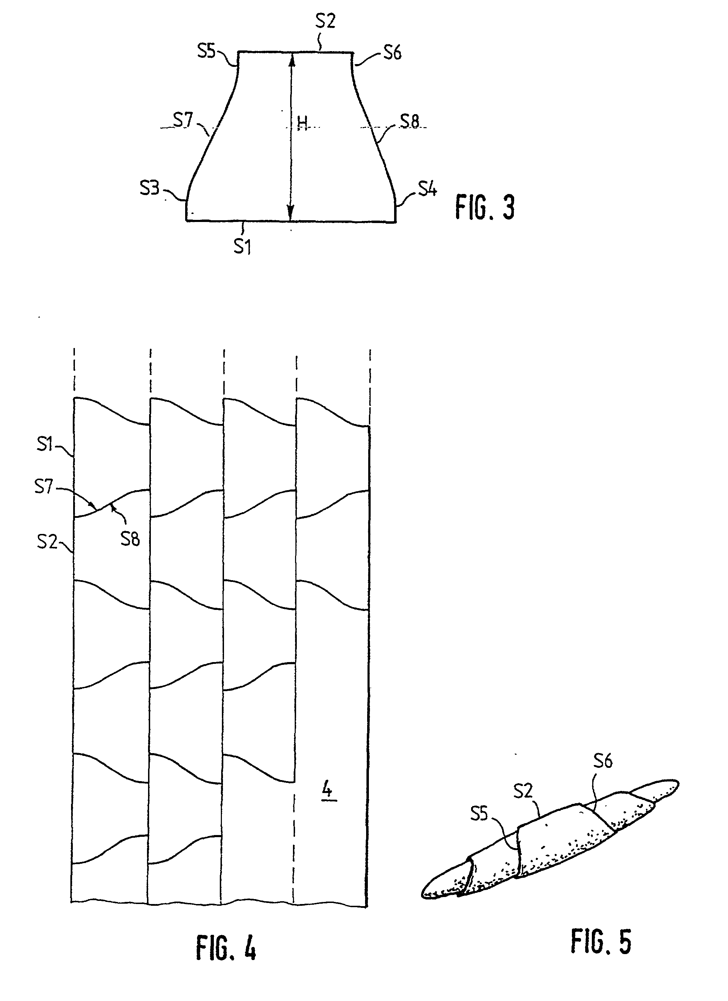

Die Ausführung nach Fig. 3 unterscheidet sich von der nach Fig. 1 im wesentlichen dadurch, daß die Übergänge zwischen den Anschlußseiten S3, S5, S4, S6 und den Zwischenseiten S7, S8 nicht eckig bzw. polygonal geknickt, sondern rundlich gekrümmt oder gebogen verlaufen. Das restteigfreie Ausstanzen dieser gerundeten Teigstücke aus einem kontinuierlichen Teigband 4 ist in Fig. 4 veranschaulicht. Im übrigen gelten die Ausführungen zu Fig. 1 und 2 entsprechend.

Der in Fig. 5 dargestellte Teigformling könnte der Herstellung eines Croissant dienen. Die kürzere Stirnseite S2 nebst den unmittelbar anschließenden Anschluß stücken S5, S6 befindet sich dabei auf dem Außenumfang der Wicklung. Die längere Stirnseite S1 mit Anschlußstücken S3, S4 ist in dieser Darstellung nicht sichtbar, weil diese Seiten sich im Zuge des Einrollens mit der breiteren Stirnseite S1 zuerst im Inneren des gewickelten Teigformlings befinden.

## Patentansprüche

1. Teigstück zur Bildung gewickelter Teigprodukte wie zum Beispiel Salzstangen oder Kornspitz, mit einer flachen mehreckigen Grundform, welche zwei schräge und zueinander konvergierende Zwischenseiten (S7,S8) aufweist, dadurch gekennzeichnet, daß die Zwischenseiten (S7, S8) einem Teil einer Trapezform oder Dreieckform entsprechen, wobei sich an jedes der beiden Enden der Zwischenseiten (S7,S8) eine Anschlußseite (S3,S4,S5,S6) in einer recht- oder stumpfwinkligen Knickung, Biegung oder Krümmung mit ihrem einen Ende anschließt, und die jeweils anderen Enden der Anschlußseiten (S3,S4,S5,S6) über eine längere und eine kürzere Stirnseite (S1,S2) miteinander verbunden sind.

2. Teigstück nach Anspruch 1, dadurch gekennzeichnet, daß die Anschlußseiten (S3,S4,S5,S6) und/oder die Stirnseiten (S1,S2) zueinander parallel verlaufen.

3. Teigstück nach Anspruch 1 oder 2, dadurch gekennzeichnet, daß die Anschlußseiten (S3,S4,S5,S6) und die Stirnseiten miteinander rechte Winkel einschließen.

4. Teigstück nach einem der vorangehenden Ansprüche, dadurch gekennzeichnet, daß die Anschlußseiten (S3,S4,S5,S6) in ihrer Länge einander entsprechen oder übereinstimmen.

5. Teigstück nach einem der vorangehenden Ansprüche, dadurch gekennzeichnet, daß die Summe der Längen wenigstens zweier Anschlußseiten (S3,S4,S5,S6) zwanzig Prozent des Abstandes zwischen den Stirnseiten (S1,S2) entspricht.

6. Teigstück nach einem der vorangehenden Ansprüche, dadurch gekennzeichnet, daß die Übergänge zwischen den Stirnseiten (S1,S2), Anschlußseiten (S3,S4,S5,S6) und den Zwischenseiten (S7,S8) gerundet sind.

7. Teigstück nach einem der vorangehenden Ansprüche, dadurch gekennzeichnet, daß seine Grundform in einen mittleren Abschnitt (1) mit trapezartiger Struktur oder Kontur und zwei jeweils daran anschließende äußere Abschnitte (2,3) mit jeweils rechteckartiger Struktur oder Kontur untergliedert ist.

8. Teigstück nach Anspruch 7, dadurch gekennzeichnet, daß die äußeren Abschnitte (2,3) unterschiedliche Breiten aufweisen.

9. Teigstück nach einem der vorangehenden Ansprüche, gekennzeichnet durch eine Grundform, die bezüglich einer Mittel- oder Höhenachse (H) symmetrisch ist, deren Verlängerung die Stirnseiten (S1,S2) lotrecht durchsetzt.

## Claims

1. Dough piece for forming rolled dough products, such as for example salt sticks or "Kornspitz", having a flat, polygonal basic form, which has two sloping and converging intermediate sides, characterised in that the intermediate sides (S7, S8) correspond to a part of the shape of a trapezium or triangle, wherein a joining side (S3, S4, S5, S6) adjoins each end of the intermediate sides (S7, S8) at a right-angled or obtuse-angled bend or curvature with its end, and the respective other ends of the joining sides (S3, S4, S5, S6) are connected together via a longer and a shorter end side (S1, S2).

2. Dough piece according to claim 1, characterised in that the joining sides (S3, S4, S5, S6) and/or the end sides (S1, S2) extend parallel to one another.

3. Dough piece according to claim 1 or 2, characterised in that the joining sides (S3, S4, S5, S6) and the end sides include right angles with one another.

4. Dough piece according to one of the preceding claims, characterised in that the joining sides (S3, S4, S5, S6) have the same length.

5. Dough piece according to one of the preceding claims, characterised in that the total of the lengths of at least two joining sides (S3, S4, S5, S6) corresponds to twenty per cent of the distance between the end sides (S1, S2).

6. Dough piece according to one of the preceding claims, characterised in that the transitions between the end sides (S1, S2), joining sides (S3, S4, S5, S6) and intermediate sides (S7, S8) are rounded.

7. Dough piece according to one of the preceding claims, characterised in that its basic shape is divided into a central section (1) of trapezoid structure or contour, and two outer sections (2, 3) adjoining the same each having a rectangular structure or contour.

8. Dough piece according to claim 7, characterised in that the outer sections (2, 3) have different widths.

9. Dough piece according to one of the preceding claims, characterised by a basic shape which is symmetrical about a central or vertical axis (H), whose extension perpendicularly bisects the end sides (S1, S2).

## Revendications

1. Morceau de pâte pour des produits roulés formés de pâte, comme par exemple des biscuits salés ou des produits en pointe à base de céréales possédant une forme de base plane polygonale, qui comporte deux côtés intermédiaires (S7, S8) obliques, qui convergent l'un vers l'autre, caractérisé en ce que les côtés intermédiaires (S7, S8) correspondent à une partie d'une forme trapézoïdale ou d'un triangle, un côté de raccordement (S3, S4, S5, S6) se raccordant, au niveau de chacune des deux extrémités des côtés intermédiaires (S7, S8), par un coude à angle droit ou à angle obtus, une partie courbe et une partie cintrée, au niveau d'une de leurs extrémités, et les autres extrémités respectives des côtés de raccordement (S3, S4, S5, S6) étant reliées entre elles par l'intermédiaire d'un côté frontal plus long et d'un côté frontal plus court (S1, S2).

2. Morceau de pâte selon la revendication 1, caractérisé en ce que les côtés de raccordement (S3, S4, S5, S6) et/ou les côtés frontaux (S1, S2) sont parallèles entre eux.

3. Morceau de pâte selon la revendication 1 ou 2, caractérisé en ce que les côtés de raccordement (S3, S4, S5, S6) et les côtés frontaux font entre eux des angles droits.

4. Morceau de pâte selon l'une des revendications précédentes, caractérisé en ce que les côtés de raccordement (S3, S4, S5, S6) ont des longueurs qui concordent ou coïncident.

5. Morceau de pâte selon l'une des revendications précédentes, caractérisé en ce que la somme des longueurs d'au moins deux côtés de raccordement (S3, S4, S5, S6) correspond à vingt pour-cent de la distance entre les côtés frontaux (S1, S2).

6. Morceau de pâte selon l'une des revendications précédentes, caractérisé en ce que les jonctions entre les côtés frontaux (S1, S2), les côtés de raccordement (S3, S4, S5, S6) et les côtés intermédiaires (S7, S8) sont arrondis.

7. Morceau de pâte selon l'une des revendications précédentes, caractérisé en ce que sa forme de base est divisée en une section médiane (1) ayant une structure ou un contour de forme trapézoïdale, et deux sections extérieures respectives (2, 3)⁻ qui s'y raccordent et possèdent chacune une structure ou un contour de forme rectangulaire.

8. Morceau de pâte selon la revendication 7, caractérisé en ce que les sections extérieures (2, 3) possèdent des largeurs différentes.

9. Morceau de pâte selon l'une des revendications précédentes, caractérisé par une forme de base qui est symétrique par rapport à l'axe médian ou à un axe vertical (H) dont le prolongement coupe perpendiculairement les côtés frontaux (S1, S2).
